# EUROPÄISCHE PATENTSCHRIFT

(11) **EP 4 309 930 B1**
(45) Veröffentlichungstag und Bekanntmachung des Hinweises auf die Patenterteilung: **18.02.2026**
(21) Anmeldenummer: 22185916.8
(22) Anmeldetag: 20.07.2022
(51) Int. Cl.: B60J 5/06

(54) **PLANENSPANNVORRICHTUNG, PLANENAUFBAU UND NUTZFAHRZEUG**
TARPAULIN TENSIONING DEVICE, TARPAULIN STRUCTURE AND COMMERCIAL VEHICLE
DISPOSITIF DE TENSION DE BÂCHES, STRUCTURE DE BÂCHE ET VÉHICULE UTILITAIRE

(43) Veröffentlichungstag der Anmeldung: 24.01.2024
(73) Patentinhaber: Schmitz Cargobull AG, 48341 Altenberge (DE)
(72) Erfinder: DERKS, Roger, 5922 XT Venlo (NL); RAUß, Niklas, 48432 Rheine (DE)
(74) Vertreter: Liedtke & Partner Patentanwälte

(56) Entgegenhaltungen:
- EP-A1- 3 766 714
- EP-A1- 3 981 625
- DE-A1- 102021 200 729
- DE-B3- 102006 044 208
- DE-C1- 10 210 773

## Beschreibung

Die Erfindung betrifft einen Planenaufbau für ein Nutzfahrzeug gemäß dem Oberbegriff des Anspruchs 1 und ein Nutzfahrzeug.

Neben so genannten Kofferaufbauten sind für Nutzfahrzeuge so genannte Planenaufbauten bekannt, bei denen Seitenwände und ein Dach durch zumindest eine Plane verschlossen sind. Eine Stirnwand ist bei Planenaufbauten meist als feste Wand ausgebildet, während eine Rückwand beispielsweise durch zwei Flügeltüren gebildet ist, um einen Laderaum bedarfsweise von hinten zu beladen. Bei einer entlang einer Seitenwand verschiebbaren Seitenplane werden die Planenaufbauten auch als Curtainsider bezeichnet. Ein Dach von Planenaufbauten weist typischerweise seitlich angeordnete Holmstrukturen in Form von Längsholmen auf, welche unter Bildung einer Rahmenstruktur quer zum Nutzfahrzeug über Spriegel miteinander verbunden sind. Die Rahmenstruktur trägt dann die das Dach verschließende Plane, wobei die Rahmenstruktur beispielsweise durch Rungen getragen wird, die sich an Ecken des Nutzfahrzeugs befinden oder zwischen diesen Eckrungen entlang der Seitenwand verteilt als Mittelrungen vorgesehen sind. Planenaufbauten weisen zudem einen Ladeboden auf, auf welchem eine zu transportierende Ladung im Laderaum des Planenaufbaus abgestellt werden kann.

Die Seitenplanen weisen ein flächiges Planenmaterial auf, wobei an seitlichen Rändern des Planenmaterials jeweils ein Keder vorgesehen ist. Die Planenmaterialien bestehen meist aus Kunststoff oder Kunststoffen und können an einem oberen Rand mit in einem Längsholm des Dachs verschiebbaren Schlitten verbunden sein, so dass die Seitenplane zum Be- und Entladen des Laderaums sowie zum Verschließen der Seitenwand in Längsrichtung verschoben werden kann.

Die Keder der Seitenplane sind formschlüssig in so genannten Planenspannmitteln aufgenommen, welche dem Spannen der Seitenplane vor der Fahrt dienen. Hierzu werden die Planenspannmittel zunächst aus einer Nichtgebrauchsstellung in eine Gebrauchsstellung verstellt. In der Nichtgebrauchsstellung können die Planenspannmittel lose mit dem Planenmaterial entlang der Seitenwand verschoben werden, um den Laderaum des Planenaufbaus be- und entladen zu können und um die geöffnete Seitenwand anschließend wieder verschließen zu können. In der Gebrauchsstellung sind die Planenspannmittel mit den an einer Seitenwand gegenüber vorgesehenen Eckrungen verbunden. Dabei werden die Planenspannmittel in Aufnahmen der Eckrungen eingesteckt.

Beispielsweise sind die Planenspannmittel als Planenspannrohr ausgebildet, welches von einem Fahrzeugnutzer über eine mit einer Eckrunge verbundene Spanneinrichtung um eine eigene Längsrichtung gedreht werden kann, so dass sich ein Teil des Planenmaterials um das Planenspannmittel in Form des Planenspannrohrs wickelt und so die Seitenplane gespannt wird. Dies soll durch einen Fahrtwind hervorgerufene Flatterbewegungen der Seitenplane minimieren. Das gegenüberliegende Planenspannmittel, das in eine gegenüberliegende Eckrunge eingesetzt ist, kann in gleicher Weise mit einer Spanneinrichtung gespannt werden, wenn an der entsprechenden Eckrunge ebenfalls eine Spanneinrichtung vorgesehen und das dortige Planenspannmittel als geeignetes Planenspannrohr ausgebildet ist. Andernfalls dient das dortige Planenspannmittel, das beispielsweise in Form einer so genannten Hakleiste ausgebildet sein kann, lediglich der Verbindung mit der Eckrunge und als Widerlager für das Spannen des Planenmaterials durch das Drehen des gegenüberliegenden Planenspannmittels. Die beiden Planenspannmittel müssen sich dabei nicht unbedingt voneinander unterscheiden, so dass beide Planenspannmittel bedarfsweise als Planenspannrohre bezeichnet werden können, ganz gleich ob zum Spannen der Seitenplane auch beide um ihre Längsachse gedreht werden oder überhaupt gedreht werden können oder nicht.

Um einen Luftwiderstand beim Verfahren von nicht vollständig beladenen Planenaufbauten verringern zu können, sind Planenaufbauten mit einem, insbesondere an einem hinteren Ende eines Nutzfahrzeugs, absenkbaren Dach bekannt. Das Dach kann dabei in einer oberen Stellung arretiert werden, wenn das Nutzfahrzeug voll beladen ist, um möglichst viel Ladevolumen oder eine große Ladehöhe bereitzustellen. Ist das Nutzfahrzeug nicht vollständig beladen und ist nicht das gesamte Volumen des Planenaufbaus zum Verstauen von Ladung erforderlich, kann das Dach in einer abgesenkten Stellung arretiert werden, um einen Luftwiderstand des Nutzfahrzeugs zu verringern. Beispielsweise werden hierzu die hinteren Eckrungen des Planenaufbaus höhenverstellbar oder teleskopierbar ausgebildet.

Besonders effektiv ist die Absenkung, wenn diese bedarfsweise sehr weit erfolgen kann. Hierbei muss überschüssiges Planenmaterial zusammengerafft und so verstaut werden, dass dieses nicht im Fahrtwind flattert und den Luftwiderstand des Nutzfahrzeugs so nicht wieder unnötig erhöht.

Aus der DE 10 2006 044 208 B3 ist eine Seitenspannvorrichtung für eine horizontale Straffung einer Seitenplane eines Nutzfahrzeugaufbaus bekannt. Die Seitenspannvorrichtung umfasst ein seitlich geschlitztes Vertikalrohr, in das ein seitlicher Befestigungsabschnitt im Bereich einer Seitenplanenkante einführbar sowie auf- und abwickelbar zu befestigen ist. Mit einem unteren Ende des Vertikalrohrs ist eine Spannwelle gekoppelt, welche um eine Vertikalachse drehbar ist. Das Vertikalrohr besteht aus einem geschlitzten Basisrohr und einem geschlitzten Schiebling, der zu einer Längenänderung des Vertikalrohres teleskopisch im Basisrohr verschiebbar ist. Eine Länge des Schieblings entspricht einer Höhe der Seitenplane, wobei der Schiebling allein die Seitenplanenkante trägt. Ein Basisrohr ist durch eine Schlitzführung unterbrochen, die entsprechend einer Ausfahrlänge des Schieblings begrenzt ist. Der Schiebling trägt einen nur innerhalb der begrenzten Schlitzführung verfahrbaren Vorsprung, der bei Drehung des Basisrohrs Seitenwände des Schieblings kontaktiert und ihn um die Achse des Vertikalrohrs mitdrehen lässt.

Weiterhin ist aus der EP 3 981 625 A1 ein Planenaufbau eines Nutzfahrzeugs mit einer Seitenplane bekannt. Die Seitenplane umfasst ein Planenmaterial zum Verschließen eines Laderaums und ein Planenspannmittel zum Spannen des den Laderaum verschließenden Planenmaterials. Das Planenspannmittel ist zwischen einer Gebrauchsstellung zum Spannen des Planenmaterials und einer Nichtgebrauchsstellung zum Verschieben des Planenmaterials entlang einer Seite des Planenaufbaus verstellbar vorgesehen. Das Planenspannmittel ist in mehrere unterschiedliche Gebrauchsstellungen bringbar und mehrteilig ausgebildet. Ein Teil des Planenspannmittels ist als Verlängerungselement ausgebildet. Einerseits ist dieser Teil in einer verlängerten Gebrauchsstellung unter Vergrößerung einer effektiven Länge des Planenspannmittels mit einem weiteren Teil des Planenspannmittels verbunden und andererseits in einer verkürzten Gebrauchsstellung nicht unter Vergrößerung der effektiven Länge des Planenspannmittels vorgesehen. Das Planenmaterial weist im Verbindungsbereich zwischen dem Verlängerungselement und dem anderen Teil des Planenspannmittels einen Einschnitt oder eine Aussparung auf. Auf einer Seite des Einschnitts oder der Aussparung ist das Planenmaterial über einen Keder in dem Verlängerungselement und auf der gegenüberliegenden Seite des Einschnitts oder der Aussparung über einen Keder in dem anderen Teil des Planenspannmittels gehalten.

Die EP 3 766 714 A1 beschreibt eine Vorrichtung zum Spannen einer höhenverstellbaren Plane eines Nutzfahrzeugaufbaus mit einem Spannelement und einer Wickelwelleneinheit, die mit dem Spannelement kraft-, form- und/oder reibschlüssig verbunden ist zum Aufbringen eines Drehmoments auf die Wickelwelleneinheit entlang einer Längsachse der Wickelwelleneinheit. Die Wickelwelleneinheit weist eine erste Hauptwelle mit einem ersten Hauptwellenende und einem zweiten Hauptwellenende und eine erste Schiebewelle mit einem ersten Schiebewellenende und einem zweiten Schiebewellenende auf. Die erste Hauptwelle und die erste Schiebewelle sind jeweils als eine geschlitzte Hohlwelle mit einem Innenprofil zur Aufnahme eines Keders der Plane ausgebildet. Die erste Schiebewelle ist in dem Innenprofil der ersten Hauptwelle aufgenommen. Ein Außenprofil der ersten Schiebewelle greift derart in das Innenprofil der ersten Hauptwelle ein, dass die Schiebewelle und die erste Hauptwelle ausschließlich in Längsrichtung zueinander bewegbar sind.

Die DE 10 2021 200 729 A1 beschreibt eine Spannvorrichtung für eine Seitenplane eines Nutzfahrzeugs mit einer durch einen Spanntrieb antreibbaren Spannwelle. Die Spannwelle bildet eine axiale, hinterschnittene Aufnahmenut für einen verdickten Anschlussrand der Seitenplane und ist aus einer Trägerwelle und einer gegenüber der Trägerwelle teleskopartig geführten Wellenverlängerung zusammengesetzt. Die Wellenverlängerung umfasst eine auf der Trägerwelle verschiebbare, geschlitzte Hülse, deren einwärts gebogene Schlitzränder in eine Nutöffnung der Aufnahmenut der Trägerwelle eingreifende Drehanschläge bilden. Die Hülse weist einen der Trägerwelle entsprechenden Wellenstummel auf, der in das von der Trägerwelle abgekehrte Hülsenende verschiebefest eingesetzt ist.

Die DE 102 10 773 C1 beschreibt einen Aufrollstab als Bestandteil eines Eckpfeilers von Planenfahrzeugen mit einem in Achsenrichtung verlaufenden Seitenschlitz zum Einsetzen einer mit einem Keder versehenen Kante einer zu straffenden Seitenplane. Der Aufrollstab besteht aus einem Hauptstab und einem Schiebling, die gegeneinander verdrehbar und teleskopierbar sowie beide mit einem zur Koinzidenz bringbaren Seitenschlitz versehen sind. Ein Innenraum des Schieblings nimmt den Keder auf. Eine sich bei Straffung der Plane ergebende Klemmung eines Planenrandbereiches im sich verengenden Koinzidenzbereich der beiden Schlitze fixiert den Schiebling gegen den Hauptstab.

Der Erfindung liegt die Aufgabe zu Grunde, einen neuartigen Planenaufbau für ein Nutzfahrzeug und ein neuartiges Nutzfahrzeug anzugeben.

Die Aufgabe wird erfindungsgemäß gelöst durch einen Planenaufbau, welcher die im Anspruch 1 angegebenen Merkmale aufweist, und ein Nutzfahrzeug, welches die im Anspruch 13 angegebenen Merkmale aufweist.

Vorteilhafte Ausgestaltungen der Erfindung sind Gegenstand der abhängigen Ansprüche.

Ein Planenaufbau für ein Nutzfahrzeug weist eine Stirnwand, eine Rückwand, zwei Seitenwände, einen Boden und ein sich zwischen der Stirnwand, der Rückwand und den Seitenwänden erstreckendes Dach auf, dessen Höhe über dem Boden variabel einstellbar ist. Weiterhin weist der Planenaufbau zumindest eine Plane auf, welche zumindest abschnittsweise die Stirnwand, die Rückwand und/oder zumindest eine der Seitenwände bildet. Die Plane ist dabei mit einem oberen Planenabschnitt an dem Dach in Längs- und/oder Querrichtung des Planenaufbaus verschiebbar angeordnet. Weiterhin weist der Planenaufbau zumindest eine, an einem Ende der Plane befestigte und zu einem Spannen der Plane in einem geschlossenen Zustand in Längs- und/oder Querrichtung des Planenaufbaus vorgesehene Planenspannvorrichtung auf.

Die Planenspannvorrichtung weist ein rohr- und/oder stabförmiges Planenspannmittel auf. Das Planenspannmittel ist mehrteilig mit mehreren in Längsrichtung des Planenspannmittels hintereinander angeordneten und miteinander verbindbaren oder verbundenen Planenspannelementen ausgebildet, wobei die Planenspannelemente mittels Verbindungsabschnitten formschlüssig in Umfangsrichtung um die Längsrichtung des Planenspannmittels miteinander verbindbar oder verbunden sind. An dem Verbindungsabschnitt eines Planenspannelements ist zumindest ein Positionierungselement angeordnet oder ausgebildet. An dem Verbindungsabschnitt eines zu einer Verbindung mit dem Planenspannelement vorgesehenen weiteren Planenspannelements ist zumindest eine zu dem zumindest einen Positionierungselement komplementäre Positionierungsstruktur angeordnet oder ausgebildet. Dabei sind das zumindest eine Positionierungselement und die zumindest eine Positionierungsstruktur derart angeordnet und ausgebildet, dass die beiden Planenspannelemente in genau einer relativen Position zueinander zur Erzeugung der formschlüssigen Verbindung in Umfangsrichtung miteinander verbindbar sind. Die Plane ist zum Spannen in Umfangsrichtung um das Planenspannmittel wickelbar.

Erfindungsgemäß ist bei verringerter Höhe des Daches eine Verbindung zwischen zumindest zwei Planenspannelementen getrennt.

Die Höhenverstellbarkeit des Daches ermöglicht eine Verringerung eines Strömungswiderstands des Planenaufbaus und somit eine Verringerung eines zur Bewegung des Planenaufbaus erforderlichen Energiebedarfs. Aufgrund der Verwendung der Planenspannvorrichtung ist bei unterschiedlichen Höheneinstellungen des Daches eine besonders einfach durchführbare und zuverlässige Spannbarkeit der Plane realisierbar. Dabei können Höhenunterschiede zwischen einer maximalen Höhe und einer minimalen Höhe des Daches über dem Boden in einfacher Weise ausgeglichen werden.

Mittels des mehrteiligen Planenspannmittels kann in besonders einfacher und zuverlässiger Weise ein Spannen der Plane insbesondere auch dann sichergestellt werden, wenn das Dach des Planenaufbaus variabel in unterschiedlichen Höhen über einem Boden des Planenaufbaus positioniert werden kann. Dabei können durch Erzeugen und Trennen der Verbindung zwischen mehreren Planenspannelementen Höhenunterschiede zwischen einer maximalen Höhe und einer minimalen Höhe des Daches über dem Boden mit besonders großen Werten ausgeglichen werden.

Aufgrund des Positionierungselements und der Positionierungsstruktur kann eine positionsrichtige Anordnung der Planenspannelemente zueinander sichergestellt werden. Dies ermöglicht insbesondere, dass an den Planenspannelementen angeordnete Befestigungsstrukturen zur Befestigung der Plane im verbundenen Zustand der Planenspannelemente stets richtig zueinander ausgerichtet sind und somit stets eine sichere sowie einfach und schnell herstellbare Befestigung der Plane an den Planenspannelementen möglich ist. Somit ist mittels der Planenspannvorrichtung das so genannte Poka-Yoke-Prinzip realisierbar.

In einer möglichen Ausgestaltung des Planenaufbaus ragt das Positionierungselement zumindest im Wesentlichen senkrecht zur Längsrichtung des Planenspannmittels nach außen oder innen von dem zugehörigen Verbindungsabschnitt ab. Ein derart ausgebildetes Positionierungselement ist besonders einfach herstellbar und erfüllt zuverlässig seine Funktion.

In einer weiteren möglichen Ausgestaltung des Planenaufbaus ist die Positionierungsstruktur eine in den zugehörigen Verbindungsabschnitt eingebrachte Vertiefung. Eine derart ausgebildete Positionierungsstruktur ist besonders einfach herstellbar und erfüllt zuverlässig seine Funktion, insbesondere in Kombination mit einem zuvor beschriebenen komplementären abragenden Positionierungselement.

In einer weiteren möglichen Ausgestaltung des Planenaufbaus ist die Positionierungsstruktur eine in eine Mantelfläche des zugehörigen Verbindungsabschnitts eingebrachte, die Mantelfläche abschnittsweise vollständig durchdringende Aussparung, wobei die Mantelfläche im verbundenen Zustand der Planenspannelemente einen Teil einer Sichtseite des Planenspannmittels bildet. Eine solche durchdringende Ausbildung der Aussparung in der Mantelfläche ermöglicht für einen Nutzer, dass dieser eine Position des Positionierungselements in der Positionierungsstruktur erkennen kann und somit sowohl ein einfacheres und intuitives Verbinden der Planenspannelemente als auch eine Kontrolle einer exakten und richtigen Verbindungsposition der Planenspannelemente für den Nutzer möglich ist.

In einer weiteren möglichen Ausgestaltung des Planenaufbaus umfasst der Verbindungsabschnitt eines Planenspannelements zumindest ein Halteelement. Der Verbindungsabschnitt des weiteren Planenspannelements weist zumindest eine Haltestruktur auf, wobei in einem verbundenen Zustand der Planenspannelemente das Haltelement kraft- und/oder formschlüssig mit der Haltestruktur in Längsrichtung des Planenspannmittels verbunden ist. Dies ermöglicht eine Sicherung der Verbindung der Planenspannelemente in Längsrichtung des Planenspannmittels durch Hemmung einer möglichen Bewegung der Planenspannelemente in Längsrichtung relativ zueinander.

In einer weiteren möglichen Ausgestaltung des Planenaufbaus ist das Halteelement senkrecht zur Längsachse des Planenspannmittels federnd gelagert und ist in einem verbundenen Zustand der Planenspannelemente formschlüssig mit der Haltestruktur in Längsrichtung des Planenspannmittels verbunden. Die federnde Lagerung ermöglicht eine besonders einfache Handhabung des Planenspannmittels während einer Verbindung der Planenspannelemente und ermöglicht eine sichere Hemmung einer möglichen Bewegung der Planenspannelemente in Längsrichtung relativ zueinander.

In einer weiteren möglichen Ausgestaltung des Planenaufbaus ist das Halteelement beispielsweise derart ausgebildet, dass es allein durch Reibung eine Bewegung der Planenspannelemente in Längsrichtung relativ zueinander hemmt.

In einer weiteren möglichen Ausgestaltung des Planenaufbaus ist das Halteelement beispielsweise derart ausgebildet, dass es durch magnetische Kräfte mit der Haltestruktur eine Bewegung der Planenspannelemente in Längsrichtung relativ zueinander hemmt.

In einer weiteren möglichen Ausgestaltung des Planenaufbaus ist das Halteelement beispielsweise derart ausgebildet, dass dieses bei Erreichen einer Zielposition der Planenspannelemente relativ zueinander manuell oder automatisch von einer nicht hemmenden Ruhestellung in eine die Bewegung der Planenspannelemente in Längsrichtung relativ zueinander hemmende Betriebsstellung überführt wird. Im einfachsten Fall wird hierzu beispielsweise ein Halteelement von einem Nutzer in Eingriff mit der Haltestruktur gebracht. Bei einer automatisierten Ausführung ist das Halteelement beispielsweise mit einem Betätigungsmechanismus gekoppelt, welcher bei Erreichen einer Zielposition der Planenspannelemente relativ zueinander das Halteelement in Eingriff mit der Haltestruktur bringt. Der Betätigungsmechanismus kann dabei beispielsweise mechanisch, elektrisch und/oder magnetisch betrieben und/oder gesteuert sein. Beispielsweise kann kurz vor Erreichen der Zielposition der Betätigungsmechanismus durch Bewegung der Planenspannelemente zueinander mechanisch bewegt werden und seine Bewegung direkt oder indirekt auf das Haltelement übertragen, so dass dieses in Eingriff mit der Haltestruktur gebracht wird.

In einer weiteren möglichen Ausgestaltung des Planenaufbaus sind das Halteelement und das Positionierungselement ein gemeinsames Bauteil. Dies ermöglicht ein einfache, kostengünstige und zuverlässige Realisierung der positionsrichtigen und gegen Bewegung in Längsrichtung gesicherten Anordnung der Positionierungselemente mit einem gemeinsam Bauteil.

In einer weiteren möglichen Ausgestaltung des Planenaufbaus sind die Haltestruktur und die Positionierungsstruktur eine gemeinsame Struktur, das heißt dieselbe Struktur. Dies ermöglicht ein einfache, kostengünstige und zuverlässige Realisierung der positionsrichtigen und gegen Bewegung in Längsrichtung gesicherten Anordnung der Positionierungselemente mit einer gemeinsam Struktur.

In einer weiteren möglichen Ausgestaltung des Planenaufbaus sind zu einem Eingriff miteinander vorgesehene Abschnitte des Halteelements und der Haltestruktur als Kugelabschnitt ausgeformt. Dies ermöglicht einem Nutzer eine einfach und komfortabel durchführbare Verbindung der Planenspannelemente und gleichzeitig eine sichere Fixierung derselben zueinander.

In einer weiteren möglichen Ausgestaltung des Planenaufbaus sind oder ist eine manuell antreibbare Spannhandhabe und/oder ein motorisch antreibbares Spannmittel vorgesehen, wobei die Spannhandhabe und/oder das Spannmittel einen mit einem Verbindungsabschnitt eines zu koppelnden Planenspannelements korrespondierenden Verbindungsabschnitt aufweisen und das Planenspannmittel mittels der Spannhandhabe und/oder des Spannmittels um seine Längsachse drehbar ist. Eine solche Ausbildung ermöglicht in einfacher Weise eine sichere Kopplung des Planenspannmittels mit der Spannhandhabe und/oder dem Spannmittel und eine sichere Betätigung des Planenspannmittels.

In einer weiteren möglichen Ausgestaltung des Planenaufbaus weisen die Planenspannelemente jeweils eine Befestigungsstruktur zur Befestigung der Plane auf. Die Befestigungsstruktur ist beispielsweise ein in Längsrichtung des Planenspannmittels an einer Außenseite der Planenspannelemente eingebrachter Einschnitt oder eine eingebrachte Aussparung, welche zur Aufnahme eines an der Plane angeordneten Keders ausgebildet ist. Dies ermöglicht einerseits eine sichere und einfach durchführbare Befestigung und anderseits einen sicheren Halt der Planen an den Planenspannelementen.

In einer weiteren möglichen Ausgestaltung des Planenaufbaus weisen die Verbindungsabschnitte der Planenspannelemente jeweils einen unrunden Querschnitt zur Erzeugung der formschlüssigen Verbindung in Umfangsrichtung auf. Der Querschnitt kann dabei jede denkbare unrunde Form, beispielsweise eine ovale Form, eine vieleckige Form, eine elliptische Form etc., aufweisen.

Eine weitere mögliche Ausgestaltung des Planenaufbaus sieht vor, dass der obere Planenabschnitt in Querrichtung der Plane an dem Dach verschiebbar befestigt ist und die Plane somit eine Schiebeplane bildet. Dies ermöglicht eine einfache Herstellung eines Zugangs zu einem Inneren des Planenaufbaus sowie eine einfache Be- und Entladung desselben.

Gemäß einer weiteren möglichen Ausgestaltung des Planenaufbaus kann die mechanisch flexible Plane, um der Höhenverstellung des Daches folgen zu können, beispielsweise im Innenbereich des Planenaufbaus in eine Falte gelegt werden, so dass diese Falte einem Höhenverstellmaß des Planenaufbaus entspricht. Aufgrund des in seiner Länge variablen Planenspannmittels kann diese Falte nach einer Trennung der entsprechenden Planenspannelemente an einer jeweiligen Trennstelle positioniert werden. Je nach Anzahl von Planenspannelementen kann somit bei verschieden eingestellten Höhen des Daches in einfacher Weise eine Spannung der Plane sichergestellt werden und somit Bewegungen, insbesondere ein Flattern, derselben während einer Bewegung des Planenaufbaus und daraus folgend erhöhte Strömungswiderstände und Geräuschentwicklungen minimiert werden.

In einer weiteren möglichen Ausgestaltung des Planenaufbaus sind bei maximaler Höhe des Daches die Planenspannelemente in Längsrichtung des Planenspannmittels miteinander verbunden.

In einer weiteren möglichen Ausgestaltung des Planenaufbaus weist die Plane in zumindest einem Bereich, welcher zur Anordnung eines Verbindungsbereichs von zwei Planenspannelementen vorgesehen ist, eine Unterbrechung einer Befestigungsstruktur zur Befestigung an der Befestigungsstruktur der Planenspannelemente auf. Diese ermöglicht eine einfache Trennung und Verbindung der Planenspannelemente und beispielsweise in einfacher Weise die Erzeugung einer Falte in der Plane und somit eine einfache Spannbarkeit der Plane bei abgesenktem Dach.

Das erfindungsgemäße Nutzfahrzeug umfasst zumindest einen vorgenannten Planenaufbau und zeichnet sich somit aufgrund der Planenspannvorrichtung durch eine besonders einfach durchführbare und zuverlässige Spannbarkeit der Plane und daraus folgend durch einen sicheren und zuverlässigen Verschluss bei gleichzeitig hoher Variabilität aus.

Unter Nutzfahrzeugen werden dabei insbesondere Lastkraftwagen, Anhänger und Auflieger verstanden, wobei der Planenaufbau Bestandteil eines Lastkraftwagens, Anhängers oder Aufliegers sein kann.

Ausführungsbeispiele der Erfindung werden im Folgenden anhand von Zeichnungen näher erläutert.

Darin zeigen:
- Figur 1: schematisch eine Seitenansicht eines Nutzfahrzeugs,
- Figur 2: schematisch eine Seitenansicht eines Planenspannmittels,
- Figur 3: schematisch einen Längsschnitt eines Planenspannelements im Bereich eines Verbindungsabschnitts,
- Figur 4: schematisch einen Querschnitt des Planenspannelements gemäß Figur 3 im Bereich des Verbindungsabschnitts,
- Figur 5: schematisch einen Längsschnitt eines weiteren Planenspannelements im Bereich eines Verbindungsabschnitts und
- Figur 6: schematisch einen Längsschnitt der Planenspannelemente gemäß den Figuren 3 und 4 im Bereich der Verbindungsabschnitte in einem verbundenen Zustand der Planenspannelemente.

Einander entsprechende Teile sind in allen Figuren mit den gleichen Bezugszeichen versehen.

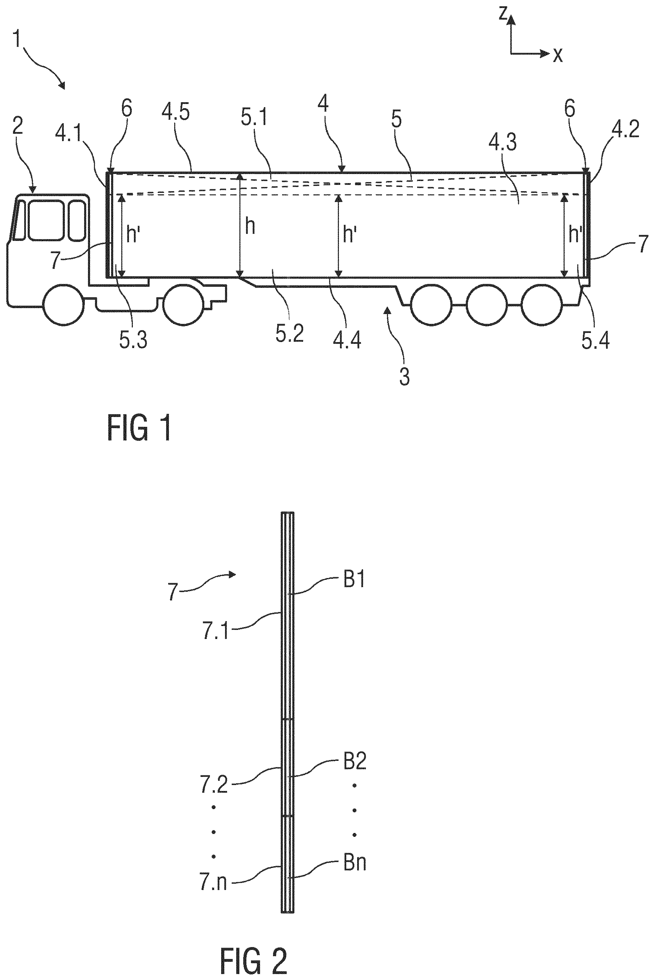

In Figur 1 ist eine Seitenansicht eines möglichen Ausführungsbeispiels eines Nutzfahrzeugs 1 dargestellt, wobei das Nutzfahrzeug 1 ein so genannter Sattelzug, auch als Sattelkraftfahrzeug bezeichnet, ist. Der Sattelzug ist dabei ein aus einer Sattelzugmaschine 2 und einem Sattelauflieger 3 gebildetes Gespann.

Der Sattelauflieger 3 umfasst einen Planenaufbau 4, welcher als so genannter Tautliner (englisch: Curtainsider) oder Schiebeplanenaufbau ausgebildet ist. Der Planenaufbau 4 umfasst eine Stirnwand 4.1, eine Rückwand 4.2, zwei Seitenwände 4.3, wobei nur eine Seitenwand 4.3 dargestellt ist, einen Boden 4.4 und ein sich zwischen der Stirnwand 4.1, der Rückwand 4.2 und den Seitenwänden 4.3 erstreckendes Dach 4.5.

Zumindest eine der Seitenwände 4.3 umfasst eine mechanisch flexible Plane 5, welche im dargestellten geschlossenen Zustand mit einem oberen Planenabschnitt 5.1 an dem Dach 4.5, insbesondere an einem nicht näher dargestellten oberen Rahmenabschnitt eines Rahmens des Planenaufbaus 4, befestigt ist. Dabei ist der obere Planenabschnitt 5.1 in Querrichtung x der Plane 5 verschiebbar am Dach 4.5 befestigt, wobei zu diesem Zweck am Dach 4.5 eine nicht näher dargestellte Führung, beispielsweise eine Führungsschiene, ausgebildet ist und am oberen Planenabschnitt 5.1 mit der Führung korrespondierende Führungselemente, beispielsweise in die Führungsschiene eingreifende Führungsrollen, angeordnet sind. Somit ist die Plane 5 eine so genannte Gardinenplane, auch als Seitenvorhang bezeichnet.

An einem dem oberen Planenabschnitt 5.1 gegenüberliegenden unteren Planenabschnitt 5.2 ist die Plane 5 in einem geschlossenen Zustand, beispielsweise mittels mehrerer nicht näher dargestellter Planenverschlusselemente, gespannt an dem Boden 4.4, insbesondere an einem nicht näher dargestellten unteren Rahmenabschnitt des Rahmens des Planenaufbaus 4, befestigt. Alternativ ist auch hier eine verschiebbare Befestigung des unteren Planenabschnitts 5.2 am Boden 4.4 analog zur Befestigung des oberen Planenabschnitts 5.1 am Dach 4.5 möglich.

Um während einer Fahrt des Nutzfahrzeugs 1 auftretende Bewegungen, insbesondere ein Flattern, der Plane 5 während einer Bewegung des Planenaufbaus 4 und daraus folgend erhöhte Strömungswiderstände und Geräuschentwicklungen zu minimieren, ist vorgesehen, dass die Plane 5 im geschlossenen Zustand in Querrichtung x verspannt wird.

Zu dieser Verspannung umfasst der Planenaufbau 4 im dargestellten Ausführungsbeispiel zwei Planenspannvorrichtungen 6. Jede der Planenspannvorrichtungen 6 umfasst ein rohr- und/oder stabförmiges Planenspannmittel 7, welches jeweils eine so genannte Eckrunge des Planenaufbaus 4 bildet und sich mit seiner Längsrichtung in Hochrichtung z des Planenaufbaus 4 erstreckt. Zur Ausführung der Verspannung ist die Plane 5 mit einem vorderen Planenabschnitt 5.3 und einem hinteren Planenabschnitt 5.4 an jeweils einem Planenspannmittel 7 befestigt und zum Spannen in Umfangsrichtung um das jeweilige Planenspannmittel 7 wickelbar. Zur Ausführung einer Drehbewegung in Umfangsrichtung um deren Längsachse sind die Planenspannmittel 7 jeweils mit einer manuell antreibbaren Spannhandhabe und/oder einem motorisch antreibbaren Spannmittel gekoppelt oder koppelbar und in einer gedrehten und insbesondere gespannten Position fixierbar.

In nicht näher dargestellten Ausführungsbeispielen kann auch an nur einem Ende der Plane 5 eine Planenspannvorrichtung 6 vorgesehen sein.

Zu einer Verbesserung einer Aerodynamik des Sattelaufliegers 3 ist eine Höhe h des Daches 4.5 über dem Boden 4.4 in einer Stufe oder mehreren Stufen variabel einstellbar. Dabei kann eine Einstellung der Höhe h über eine gesamte Länge des Planenaufbaus 4 in gleicher Weise erfolgen. Alternativ nimmt die Höhe h über die Länge des Planenaufbaus 4 ab oder zu.

Um in unterschiedlichen Höhen h, h' des Daches 4.5 über dem Boden 4.4 eine sichere sowie zuverlässige Befestigung und Verspannung der Plane 5 bei gleichzeitig sicherer und einfach handhabbarer Ausbildung der Planenspannvorrichtungen 6 zu realisieren, sind die Planenspannmittel 7 mehrteilig ausgebildet.

Ein mögliches Ausführungsbeispiel einer solchen mehrteiligen Ausbildung eines Planenspannmittels 7 ist in einer Seitenansicht in Figur 2 dargestellt.

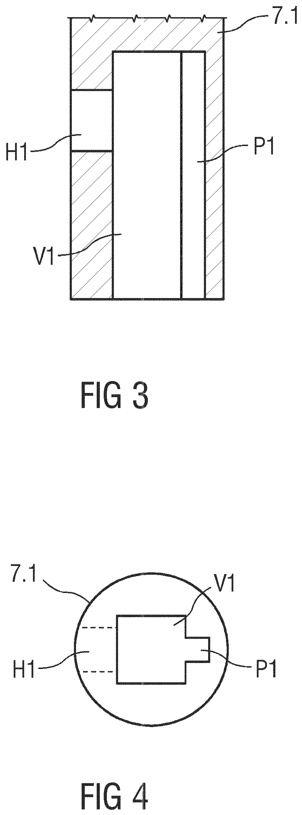

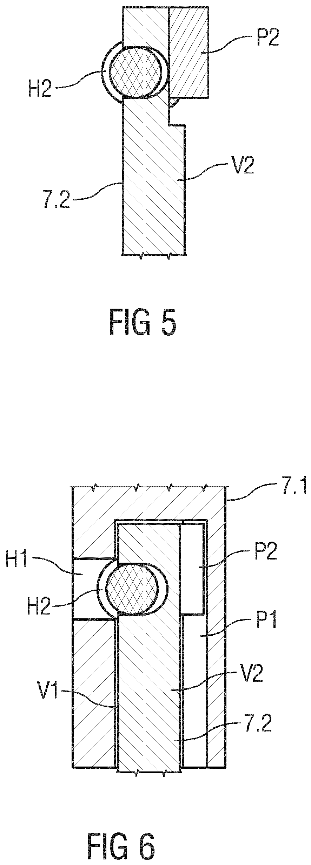

Dabei umfasst das Planenspannmittel 7 mehrere in Längsrichtung hintereinander angeordnete und miteinander verbindbare oder verbundene rohr- und/oder stabförmige Planenspannelemente 7.1 bis 7.n, welche mittels in den Figuren 4 bis 6 näher dargestellten Verbindungsabschnitten V1, V2 formschlüssig in Umfangsrichtung um die Längsrichtung z des Planenspannmittels 7 miteinander verbindbar oder verbunden sind.

Eine Anzahl und/oder Länge der Planenspannelemente 7.1 bis 7.n je Planenspannmittel 7 sind oder ist dabei beliebig, insbesondere in Abhängigkeit einer Anzahl und/oder Größe von Stufen zur Höheneinstellung des Daches 4.5, wählbar.

Zur Befestigung der Plane 5 an dem Plannenspannmittel 7 weisen die Planenspannelemente 7.1 bis 7.n jeweils eine Befestigungsstruktur B1 bis Bn auf. Die Befestigungsstruktur B1 bis Bn ist beispielsweise ein in Längsrichtung z des Planenspannmittels 7 an einer Außenseite der Planenspannelemente 7.1 bis 7.n eingebrachter Einschnitt oder eine eingebrachte Aussparung, welche zur Aufnahme eines an der Plane 5 angeordneten Keders ausgebildet ist.

Bei einer solchen Ausbildung der Befestigungsstrukturen B1 bis Bn ist es erforderlich, dass diese - wie dargestellt - im verbundenen Zustand der Planenspannelemente 7.1 bis 7.n in einer Flucht verlaufen, um ein Einführen der Plane 5 mit ihrem Keder zu ermöglichen.

Aus diesem Grund sind die Verbindungsabschnitte V1, V2 jeweils unmittelbar benachbarter Planenspannelemente 7.1 bis 7.n derart ausgebildet, dass nur genau eine und somit positionsrichtige Anordnung der Planenspannelemente 7.1 bis 7.n zueinander möglich ist.

In den Figuren 3 bis 6 sind in verschiedenen Schnittdarstellungen Planenspannelemente 7.1, 7.3 im Bereich ihrer Verbindungsabschnitte V1, V2 in einem nicht verbundenen und in einem verbundenen Zustand dargestellt.

Zur Realisierung der formschlüssigen Verbindung in Umfangsrichtung des Planenspannmittels 7 weisen die Verbindungsabschnitte V1, V2 jeweils einen unrunden Querschnitt auf. Im dargestellten Ausführungsbeispiel ist ein Verbindungsabschnitt V1 eine in das Planenspannelement 7.1 eingebrachte Aussparung mit quadratischem Querschnitt und ein korrelierender Verbindungsabschnitt V2 ein an dem Planenspannelement 7.2 ausgebildeter Vierkant mit quadratischem Querschnitt. Die beiden Verbindungsabschnitte V1, V2 sind dabei zu einer Realisierung einer Steckverbindung der Planenspannelemente 7.1, 7.2 in deren Längsrichtung vorgesehen.

In weiteren möglichen Ausgestaltungen können die Verbindungsabschnitte V1, V2 andere unrunde Querschnitte zur Erzeugung der formschlüssigen Verbindung in Umfangsrichtung aufweisen. Der Querschnitt kann dabei jede denkbare unrunde Form, beispielsweise eine ovale Form, eine vieleckige Form, eine elliptische Form etc., aufweisen.

Zur Realisierung der positionsrichtigen Verbindung der Planenspannelemente 7.1, 7.2 ist an dem Verbindungsabschnitt V2 des Planenspannelements 7.2 ein Positionierungselement P2 angeordnet oder ausgebildet und an dem Verbindungsabschnitt V1 des Planenspannelements 7.1 eine zu dem Positionierungselement P2 komplementäre Positionierungsstruktur P1 angeordnet oder ausgebildet.

Im dargestellten Ausführungsbeispiel ragt das Positionierungselement P2 zumindest im Wesentlichen senkrecht zur Längsrichtung z des Planenspannmittels 7 nach außen oder innen von dem zugehörigen Verbindungsabschnitt V2 ab und ist beispielsweise stegförmig ausgebildet. Die Positionierungsstruktur P1 ist dabei eine in den zugehörigen Verbindungsabschnitt V1 eingebrachte Vertiefung, in welcher das Positionierungselement P2 beim Einführen des Verbindungsabschnitts V2 in den Verbindungsabschnitt V1 führbar ist. In nicht näher dargestellten Ausführungsbeispielen können die Positionierungsstruktur P1 und das Positionierungselement P2 auch andere geeignete Formen aufweisen.

Beispielsweise ist die Positionierungsstruktur P1 eine in eine Mantelfläche des zugehörigen Verbindungsabschnitts V1 eingebrachte, die Mantelfläche abschnittsweise vollständig durchdringende Aussparung, wobei die Mantelfläche im verbundenen Zustand der Planenspannelemente 7.1 bis 7.n einen Teil einer Sichtseite des Planenspannmittels 7 bildet.

Um zusätzlich eine Sicherung der Verbindung der Planenspannelemente 7.1, 7.2 in Längsrichtung z des Planenspannmittels 7 zu realisieren, umfasst in einer weiteren möglichen Ausgestaltung der Planenspannvorrichtung 6 der Verbindungsabschnitt V2 des Planenspannelements 7.2 zumindest ein in senkrecht zur Längsachse z des Planenspannmittels 7 federnd gelagertes Halteelement H2, welches beispielsweise einen Kugelabschnitt aufweist. Der Verbindungsabschnitt V1 des weiteren Planenspannelements 7.1 weist zumindest eine zu dem zumindest einen Halteelement H2 komplementäre Haltestruktur H1 auf, wobei in einem verbundenen Zustand der Planenspannelemente 7.1, 7.2 das Haltelement H2 formschlüssig mit der Haltestruktur H1 in Längsrichtung z des Planenspannmittels 7 verbunden ist. Somit wird eine Hemmung einer möglichen Bewegung der Planenspannelemente 7.1, 7.2 in Längsrichtung z relativ zueinander realisiert.

In nicht näher dargestellten Ausführungsbeispielen können das Halteelement H2 und die Haltestruktur H1 auch jede andere beliebige geeignete Form aufweisen.

In nicht näher dargestellten Ausführungsbeispielen können das Halteelement H2 und das Positionierungselement P2 als gemeinsames Bauteil und die Haltestruktur H1 und die Positionierungsstruktur P1 als gemeinsame Struktur, das heißt als dieselbe Struktur, ausgebildet sein.

Um eine Verbindung des jeweiligen Planenspannelements 7.1 bis 7.n mit der Spannhandhabe und/oder dem Spannmittel zu realisieren, weisen auch die Spannhandhabe und/oder das Spannmittel in einer nicht näher dargestellten Ausführung einen mit einem Verbindungsabschnitt V1, V2 eines zu koppelnden Planenspannelements 7.1 bis 7.n korrespondierenden Verbindungsabschnitt auf, so dass das Planenspannmittel 7 mittels der Spannhandhabe und/oder des Spannmittels um seine Längsachse z drehbar ist.

### BEZUGSZEICHENLISTE

- 1: Nutzfahrzeug
- 2: Sattelzugmaschine
- 3: Sattelauflieger
- 4: Planenaufbau
- 4.1: Stirnwand
- 4.2: Rückwand
- 4.3: Seitenwand
- 4.4: Boden
- 4.5: Dach
- 5: Plane
- 5.1: oberer Planenabschnitt
- 5.2: unterer Planenabschnitt
- 5.3: vorderer Planenabschnitt
- 5.4: hinterer Planenabschnitt
- 6: Planenspannvorrichtung
- 7: Planenspannmittel
- 7.1 bis 7.n: Planenspannelement

- B1 bis Bn: Befestigungsstruktur
- H1: Haltestruktur
- H2: Halteelement
- h, h': Höhe
- P1: Positionierungsstruktur
- P2: Positionierungselement
- V1, V2: Verbindungsabschnitt
- x: Querrichtung
- z: Hochrichtung; Längsrichtung des Planenspannmittels

## Patentansprüche

1. Planenaufbau (4) für ein Nutzfahrzeug (1) mit
- einer Stirnwand (4.1),
- einer Rückwand (4.2),
- zwei Seitenwänden (4.3),
- einem Boden (4.4) und
- einem sich zwischen der Stirnwand (4.1), der Rückwand (4.2) und den Seitenwänden (4.3) erstreckenden Dach (4.5), dessen Höhe (h, h') über dem Boden (4.4) variabel einstellbar ist,
- zumindest einer Plane (5), welche zumindest abschnittsweise die Stirnwand (4.1), die Rückwand (4.2) und/oder zumindest eine der Seitenwände (4.3) bildet, wobei die Plane (5) mit einem oberen Planenabschnitt (5.1) an dem Dach (4.5) in Längs- und/oder Querrichtung des Planenaufbaus (4) verschiebbar angeordnet ist,
- zumindest einer an einem Ende der Plane (5) befestigten und zu einem Spannen der Plane (5) in einem geschlossenen Zustand in Längs- und/oder Querrichtung des Planenaufbaus (4) vorgesehenen Planenspannvorrichtung (6) mit einem rohr- und/oder stabförmigen Planenspannmittel (7), wobei
- das Planenspannmittel (7) mehrteilig mit mehreren in Längsrichtung (z) des Planenspannmittels (7) hintereinander angeordneten und miteinander verbindbaren oder verbundenen Planenspannelementen (7.1 bis 7.n) ausgebildet ist und
- die Planenspannelemente (7.1 bis 7.n) mittels Verbindungsabschnitten (V1, V2) formschlüssig in Umfangsrichtung um die Längsrichtung (z) des Planenspannmittels (7) miteinander verbindbar oder verbunden sind,
- an dem Verbindungsabschnitt (V2) eines Planenspannelements (7.1 bis 7.n) zumindest ein Positionierungselement (P2) angeordnet oder ausgebildet ist,
- an dem Verbindungsabschnitt (V1) eines zu einer Verbindung mit dem Planenspannelement (7.1 bis 7.n) vorgesehenen weiteren Planenspannelements (7.1 bis 7.n) zumindest eine zu dem zumindest einen Positionierungselement (P2) komplementäre Positionierungsstruktur (P1) angeordnet oder ausgebildet ist,
- das zumindest eine Positionierungselement (P2) und die zumindest eine Positionierungsstruktur (P1) derart angeordnet und ausgebildet sind, dass die beiden Planenspannelemente (7.1 bis 7.n) in genau einer relativen Position zueinander zur Erzeugung der formschlüssigen Verbindung in Umfangsrichtung miteinander verbindbar sind und
- die Plane (5) zum Spannen in Umfangsrichtung um das Planenspannmittel (7) der Planenspannvorrichtung (6) wickelbar ist,
**dadurch gekennzeichnet, dass**
bei verringerter Höhe (h') des Daches (4.5) eine Verbindung zwischen zumindest zwei Planenspannelementen (7.1 bis 7.n) getrennt ist.

2. Planenaufbau (4) nach Anspruch 1,
**dadurch gekennzeichnet, dass** das Positionierungselement (P2) zumindest im Wesentlichen senkrecht zur Längsrichtung (z) des Planenspannmittels (7) nach außen oder innen von dem zugehörigen Verbindungsabschnitt (V2) abragt.

3. Planenaufbau (4) nach Anspruch 1 oder 2,
**dadurch gekennzeichnet, dass** die Positionierungsstruktur (P1) eine in den zugehörigen Verbindungsabschnitt (V1) eingebrachte Vertiefung ist.

4. Planenaufbau (4) nach einem der vorhergehenden Ansprüche,
**dadurch gekennzeichnet, dass**
- die Positionierungsstruktur (P1) eine in eine Mantelfläche des zugehörigen Verbindungsabschnitts (V1) eingebrachte, die Mantelfläche abschnittsweise vollständig durchdringende Aussparung ist und
- die Mantelfläche im verbundenen Zustand der Planenspannelemente (7.1 bis 7.n) einen Teil einer Sichtseite des Planenspannmittels (7) bildet.

5. Planenaufbau (4) nach einem der vorhergehenden Ansprüche,
**dadurch gekennzeichnet, dass**
- der Verbindungsabschnitt (V2) eines Planenspannelements (7.1 bis 7.n) zumindest ein Halteelement (H2) umfasst,
- der Verbindungsabschnitt (V1) des weiteren Planenspannelements (7.1 bis 7.n) zumindest eine Haltestruktur (H1) aufweist und
- in einem verbundenen Zustand der Planenspannelemente (7.1 bis 7.n) das Haltelement (H2) kraft- und/oder formschlüssig mit der Haltestruktur (H1) in Längsrichtung (z) des Planenspannmittels (7) verbunden ist.

6. Planenaufbau (4) nach Anspruch 5,
**dadurch gekennzeichnet, dass** das Halteelement (H2) senkrecht zur Längsrichtung (z) des Planenspannmittels (7) federnd gelagert ist und in dem verbundenen Zustand der Planenspannelemente (7.1 bis 7.n) formschlüssig mit der zu dem zumindest einen Halteelement (H2) komplementär ausgebildeten Haltestruktur (H1) in Längsrichtung (z) des Planenspannmittels (7) verbunden ist.

7. Planenaufbau (4) nach Anspruch 5 oder 6,
**dadurch gekennzeichnet, dass**
- das Halteelement (H2) und das Positionierungselement (P2) ein gemeinsames Bauteil sind und/oder
- die Haltestruktur (H1) und die Positionierungsstruktur (P1) eine gemeinsame Struktur sind.

8. Planenaufbau (4) nach einem der Ansprüche 5 bis 7,
**dadurch gekennzeichnet, dass** zu einem Eingriff miteinander vorgesehene Abschnitte des Halteelements (H2) und der Haltestruktur (H1) als Kugelabschnitt ausgeformt sind.

9. Planenaufbau (4) nach einem der vorhergehenden Ansprüche,
**gekennzeichnet durch** eine manuell antreibbare Spannhandhabe und/oder ein motorisch antreibbares Spannmittel, wobei
- die Spannhandhabe und/oder das Spannmittel einen mit einem Verbindungsabschnitt (V1, V2) eines zu koppelnden Planenspannelements (7.1 bis 7.n) korrespondierenden Verbindungsabschnitt aufweisen und
- das Planenspannmittel (7) mittels der Spannhandhabe und/oder des Spannmittels um seine Längsachse drehbar ist.

10. Planenaufbau (4) nach einem der vorhergehenden Ansprüche,
**dadurch gekennzeichnet, dass** die Planenspannelemente (7.1 bis 7.n) jeweils eine Befestigungsstruktur (B1 bis Bn) zur Befestigung der Plane (5) aufweisen.

11. Planenaufbau (4) nach einem der vorhergehenden Ansprüche,
**dadurch gekennzeichnet, dass** bei maximaler Höhe (h) des Daches (4.5) die Planenspannelemente (7.1 bis 7.n) in Längsrichtung (z) des Planenspannmittels (7) miteinander verbunden sind.

12. Planenaufbau (4) nach einem der vorhergehenden Ansprüche,
**dadurch gekennzeichnet, dass** die Plane (5) in zumindest einem Bereich, welcher zur Anordnung eines Verbindungsabschnitts (V1, V2) von zwei Planenspannelementen (7.1 bis 7.n) vorgesehen ist, eine Unterbrechung einer Befestigungsstruktur zur Befestigung an der Befestigungsstruktur (B1 bis Bn) der Planenspannelemente (7.1 bis 7.n) aufweist.

13. Nutzfahrzeug (1), umfassend zumindest einen Planenaufbau (4) nach einem der vorhergehenden Ansprüche.

## Claims

1. Tarpaulin superstructure (4) for a commercial vehicle (1), having
- a front wall (4.1),
- a rear wall (4.2),
- two side walls (4.3),
- a floor (4.4) and
- a roof (4.5) which extends between the front wall (4.1), the rear wall (4.2) and the side walls (4.3), the height (h, h') of which above the floor (4.4) being variably adjustable,
- at least one tarpaulin (5) which forms at least in portions the front wall (4.1), the rear wall (4.2) and/or at least one of the side walls (4.3), wherein the tarpaulin (5) by way of an upper tarpaulin portion (5.1) is disposed on the roof (4.5) so as to be displaceable in the longitudinal and/or transverse direction of the tarpaulin superstructure (4),
- at least one tarpaulin tensioning device (6) which has a tubular and/or bar-shaped tarpaulin tensioning means (7) and which is fastened to one end of the tarpaulin (5) and provided for tensioning the tarpaulin (5) in a closed state in the longitudinal and/or transverse direction of the tarpaulin superstructure (4), wherein
- the tarpaulin tensioning means (7) is formed in multi-part fashion by a plurality of tarpaulin tensioning elements (7.1 to 7.n) which are disposed behind one another in the longitudinal direction (z) of the tarpaulin tensioning means (7) and are connectable or connected to one another, and
- the tarpaulin tensioning elements (7.1 to 7.n), by means of connection portions (V1, V2), are connectable or connected to one another in a form-fitting manner in the circumferential direction about the longitudinal direction (z) of the tarpaulin tensioning means (7),
- at least one positioning element (P2) is arranged or formed on the connection portion (V2) of a tarpaulin tensioning element (7.1 to 7.n),
- disposed or formed on the connection portion (V1) of a further tarpaulin tensioning element (7.1 to 7.n) provided for connecting to the tarpaulin tensioning element (7.1 to 7.n) is at least one positioning structure (P1) which is complementary to the at least one positioning element (P2),
- the at least one positioning element (P2) and the at least one positioning structure (P1) are disposed and formed in such a manner that the two tarpaulin tensioning elements (7.1 to 7.n) are connectable to one another in exactly one relative position to one another in order to generate the form-fitting connection in the circumferential direction, and
- for tensioning, the tarpaulin (5) is able to be wound in the circumferential direction about the tarpaulin tensioning means (7) of the tarpaulin tensioning device (6),
**characterized in that**
when the height (h') of the roof (4.5) is reduced, a connection between at least two tarpaulin tensioning elements (7.1 to 7.n) is separated.

2. Tarpaulin superstructure (4) according to Claim 1, **characterized in that** the positioning element (P2) protrudes outwards or inwards from the associated connection portion (V2) at least substantially perpendicularly to the longitudinal direction (z) of the tarpaulin tensioning means (7).

3. Tarpaulin superstructure (4) according to Claim 1 or 2,
**characterized in that** the positioning structure (P1) is a recess incorporated into the associated connection portion (V1).

4. Tarpaulin superstructure (4) according to one of the preceding claims,
**characterized in that**
- the positioning structure (P1) is a recess which is incorporated into a shell surface of the associated connection portion (V1) and in portions completely penetrates the shell surface, and
- the shell surface in the connected state of the tarpaulin tensioning elements (7.1 to 7.n) forms a part of a visible side of the tarpaulin tensioning means (7).

5. Tarpaulin superstructure (4) according to one of the preceding claims,
**characterized in that**
- the connection portion (V2) of a tarpaulin tensioning element (7.1 to 7.n) comprises at least one holding element (H2),
- the connection portion (V1) of the further tarpaulin tensioning element (7.1 to 7.n) has at least one holding structure (H1), and
- in a connected state of the tarpaulin tensioning elements (7.1 to 7.n), the holding element (H2) is in the longitudinal direction (z) of the tarpaulin tensioning means (7) connected in a force-fitting and/or form-fitting manner to the holding structure (H1).

6. Tarpaulin superstructure (4) according to Claim 5, **characterized in that** the holding element (H2) is resiliently mounted perpendicularly to the longitudinal direction (z) of the tarpaulin tensioning means (7) and in the connected state of the tarpaulin tensioning elements (7.1 to 7.n) is in the longitudinal direction (z) of the tarpaulin tensioning means (7) connected in a form-fitting manner to the holding structure (H1) formed so as to be complementary to the at least one holding element (H2) .

7. Tarpaulin superstructure (4) according to Claim 5 or 6,
**characterized in that**
- the holding element (H2) and the positioning element (P2) are a common component, and/or
- the holding structure (H1) and the positioning structure (P1) are a common structure.

8. Tarpaulin superstructure (4) according to one of Claims 5 to 7,
**characterized in that** portions of the holding element (H2) and the holding structure (H1) that are provided for mutual engagement are formed as a spherical portion.

9. Tarpaulin superstructure (4) according to one of the preceding claims,
**characterized by** a manually drivable tensioning handle and/or a motor-drivable tensioning means, wherein
- the tensioning handle and/or the tensioning means have a connection portion corresponding to a connection portion (V1, V2) of a tarpaulin tensioning element (7.1 to 7.n) to be coupled, and
- the tarpaulin tensioning means (7) is rotatable about its longitudinal axis by means of the tensioning handle and/or the tensioning means.

10. Tarpaulin superstructure (4) according to one of the preceding claims,
**characterized in that** the tarpaulin tensioning elements (7.1 to 7.n) each have a fastening structure (B1 to Bn) for fastening the tarpaulin (5).

11. Tarpaulin superstructure (4) according to one of the preceding claims,
**characterized in that** at the maximum height (h) of the roof (4.5), the tarpaulin tensioning elements (7.1 to 7.n) are connected to one another in the longitudinal direction (z) of the tarpaulin tensioning means (7).

12. Tarpaulin superstructure (4) according to one of the preceding claims,
**characterized in that** the tarpaulin (5) in at least one region, which is provided for the disposal of a connection portion (V1, V2) of two tarpaulin tensioning elements (7.1 to 7.n), has an interruption of a fastening structure for fastening to the fastening structure (B1 to Bn) of the tarpaulin tensioning elements (7.1 to 7.n).

13. Commercial vehicle (1) comprising at least one tarpaulin superstructure (4) according to one of the preceding claims.

## Revendications

1. Structure (4) de bâche pour un véhicule utilitaire (1) avec
- une paroi frontale (4.1),
- une paroi arrière (4.2),
- deux parois latérales (4.3),
- un plancher (4.4) et
- un toit (4.5) s'étendant entre la paroi frontale (4.1), la paroi arrière (4.2) et les parois latérales (4.3) et dont la hauteur (h, h') au-dessus du plancher (4.4) peut être réglée de manière variable,
- au moins une bâche (5), qui forme au moins par endroits la paroi frontale (4.1), la paroi arrière (4.2) et/ou au moins une des parois latérales (4.3), la bâche (5) étant disposée par une section supérieure (5.1) de bâche sur le toit (4.5) de manière à pouvoir coulisser dans le sens longitudinal et/ou transversal de la structure (4) de bâche,
- au moins un dispositif tendeur (6) de bâche fixé sur une extrémité de la bâche (5) et prévu pour tendre la bâche (5) dans un état fermé dans le sens longitudinal et/ou transversal de la structure (4) de bâche, avec un moyen tendeur (7) de bâche en forme de tube et/ou de barre,
- le moyen tendeur (7) de bâche étant formé en plusieurs parties avec plusieurs éléments tendeurs (7.1 à 7.n) de bâche disposés les uns derrière les autres dans le sens longitudinal (z) du moyen tendeur (7) de bâche et pouvant être reliés ou étant reliés les uns aux autres, et
- les éléments tendeurs (7.1 à 7.n) de bâche pouvant être reliés ou étant reliés les uns aux autres par complémentarité de forme dans le sens périphérique autour du sens longitudinal (z) du moyen tendeur (7) de bâche au moyen de sections de liaison (V1, V2),
- au moins un élément de positionnement (P2) étant disposé ou formé sur la section de liaison (V2) d'un élément tendeur (7.1 à 7.n) de bâche,
- au moins une structure de positionnement (P1) complémentaire à l'au moins un élément de positionnement (P2) étant disposée ou formée sur la section de liaison (V1) d'un autre élément tendeur (7.1 à 7.n) de bâche prévu pour être relié à l'élément tendeur (7.1 à 7.n) de bâche,
- l'au moins un élément de positionnement (P2) et l'au moins une structure de positionnement (P1) étant disposés et formés de telle manière que les deux éléments tendeurs (7.1 à 7.n) de bâche peuvent être reliés l'un à l'autre dans exactement une position relative l'un par rapport à l'autre pour réaliser la liaison par complémentarité de forme dans le sens périphérique, et
- la bâche (5) pouvant être enroulée autour du moyen tendeur (7) de bâche du dispositif tendeur (6) de bâche dans le sens périphérique pour la mise en tension,
**caractérisée en ce que**
dans le cas d'une hauteur réduite (h') du toit (4.5), une liaison entre au moins deux éléments tendeurs (7.1 à 7.n) de bâche est séparée.

2. Structure (4) de bâche selon la revendication 1, **caractérisée en ce que** l'élément de positionnement (P2) dépasse de la section de liaison (V2) associée vers l'extérieur ou vers l'intérieur au moins sensiblement perpendiculairement au sens longitudinal (z) du moyen tendeur (7) de bâche.

3. Structure (4) de bâche selon la revendication 1 ou 2,
**caractérisée en ce que** la structure de positionnement (P1) est un renfoncement pratiqué dans la section de liaison (V1) associée.

4. Structure (4) de bâche selon l'une des revendications précédentes,
**caractérisée en ce que**
- la structure de positionnement (P1) est une évidement pratiqué dans une surface enveloppante de la section de liaison (V1) associée et traversant totalement par endroits la surface enveloppante, et
- la surface enveloppante fait partie d'un côté visible du moyen tendeur (7) de bâche dans l'état relié des éléments tendeurs (7.1 à 7.n) de bâche.

5. Structure (4) de bâche selon l'une des revendications précédentes,
**caractérisée en ce que**
- la section de liaison (V2) d'un élément tendeur (7.1 à 7.n) de bâche comprend au moins un élément de maintien (H2),
- la section de liaison (V1) de l'autre élément tendeur (7.1 à 7.n) de bâche comporte au moins une structure de maintien (H1) et
- lorsque les éléments tendeurs (7.1 à 7.n) de bâche sont reliés, l'élément de maintien (H2) est relié à force et/ou par complémentarité de forme à la structure de maintien (H1) dans le sens longitudinal (z) du moyen tendeur (7) de bâche.

6. Structure (4) de bâche selon la revendication 5, **caractérisée en ce que** l'élément de maintien (H2) est monté de manière élastique perpendiculairement au sens longitudinal (z) du moyen tendeur (7) de bâche et est relié par complémentarité de forme, lorsque les éléments tendeurs (7.1 à 7.n) de bâche sont reliés, à la structure de maintien (H1) formée de manière complémentaire à l'au moins un élément de maintien (H2) dans le sens longitudinal (z) du moyen tendeur (7) de bâche.

7. Structure (4) de bâche selon la revendication 5 ou 6,
**caractérisée en ce que**
- l'élément de maintien (H2) et l'élément de positionnement (P2) sont un composant commun et/ou
- la structure de maintien (H1) et la structure de positionnement (P1) sont une structure commune.

8. Structure (4) de bâche selon l'une des revendications 5 à 7,
**caractérisée en ce que** des sections de l'élément de maintien (H2) et de la structure de maintien (H1) prévues pour venir en prise les unes avec les autres sont réalisées comme une sphérique.

9. Structure (4) de bâche selon l'une des revendications précédentes,
**caractérisée par** une poignée de mise sous tension pouvant être entraînée manuellement et/ou un moyen de mise sous tension pouvant être entraîné par un moteur,
- la poignée de mise sous tension et/ou le moyen de mise sous tension comportant une section de liaison correspondant à une section de liaison (V1, V2) d'un élément tendeur (7.1 à 7.n) de bâche à coupler, et
- le moyen tendeur (7) de bâche pouvant être tourné autour de son axe longitudinal au moyen de la poignée de mise sous tension et/ou du moyen de mise sous tension.

10. Structure (4) de bâche selon l'une des revendications précédentes,
**caractérisée en ce que** les éléments tendeurs (7.1 à 7.n) de bâche comportent chacun une structure de fixation (B1 à Bn) pour la fixation de la bâche (5).

11. Structure (4) de bâche selon l'une des revendications précédentes,
**caractérisée en ce que** les éléments tendeurs (7.1 à 7.n) de bâche sont reliés les uns aux autres dans le sens longitudinal (z) du moyen tendeur (7) de bâche à une hauteur maximale (h) du toit (4.5).

12. Structure (4) de bâche selon l'une des revendications précédentes,
**caractérisée en ce que** la bâche (5) comporte, dans au moins une zone, qui est prévue pour la disposition d'une section de liaison (V1, V2) de deux éléments tendeurs (7.1 à 7.n) de bâche, une interruption d'une structure de fixation pour la fixation sur la structure de fixation (B1 à Bn) des éléments tendeurs (7.1 à 7.n) de bâche.

13. Véhicule utilitaire (1), comprenant au moins une structure (4) de bâche selon l'une des revendications précédentes.
